# EUROPEAN PATENT SPECIFICATION

(11) **EP 1 555 841 B1**
(45) Date of publication and mention of the grant of the patent: **16.04.2008**
(21) Application number: 05000602.2
(22) Date of filing: 13.01.2005
(51) Int. Cl.: H04Q 7/32, H04B 1/16

(54) **Dual-mode mobile terminal having mode switching circuit**
Dual-mode Mobilendgerät mit Modusschaltkreis
Terminal mobile à double mode ayant un circuit de commutation en mode

(30) Priority: 16.01.2004 KR 2004003176
(43) Date of publication of application: 20.07.2005
(73) Proprietor: SK Teletech Co., Ltd., Seoul 135-984 (KR)
(72) Inventor: Lee, Dong-II, Gwanak-gu Seoul 151-752 (KR); Lee, Hyung-II, Kangnam-gu Seoul 135-970 (KR); Jung, Min-Kyo, Seocho-gu Seoul 137-044 (KR)
(74) Representative: Liesegang, Roland

(56) References cited:
- EP-A- 1 335 499
- WO-A-93/25955
- US-A1- 2003 065 834
- US-A1- 2003 087 680
- US-A1- 2004 029 527
- US-A1- 2004 213 262

## Description

### BACKGROUND OF THE INVENTION

### Field of the Invention

The present invention relates, in general, to a dual-mode mobile terminal having a mode switching circuit and mode switching method using the same and, more particularly, to a dual-mode mobile terminal, which performs switching between modes in a manner that prevents the occurrence of interference between parts for respective modes when a central processing unit and modems communicate with each other using dual-port random access memories in a mobile communication terminal that use a single central processing unit and a plurality of modem chips.

### Description of the Related Art

A mobile terminal capable of being used in both a Code Division Multiple Access (CDMA) network and a Wideband CDMA (WCDMA) network is called a dual-mode mobile terminal. The dual-mode mobile terminal is provided with a Radio Frequency (RF) circuit and a modem for CDMA and an RF circuit and a modem for WCDMA so that the dual-mode mobile terminal can be used in both the CDMA network and the WCDMA network.

A dual-mode mobile terminal controls a plurality of modems using a single Central Processing Unit (CPU). However, when a mobile terminal is used in one mode, a modem for the other mode is generally in a sleep mode or power-down mode. However, when hand-off between modes occurs, two modems may be simultaneously activated.

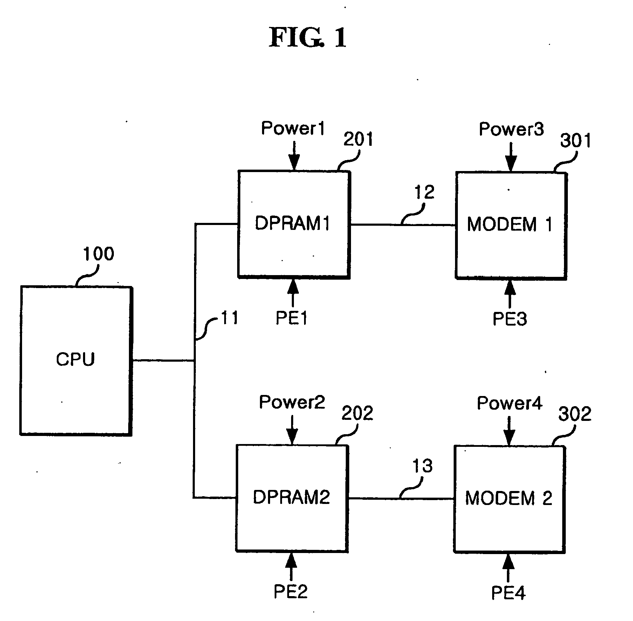

In the meantime, in order to perform communication between a CPU and modem chips, Dual-Port Random Access Memory (hereinafter referred to as DPRAM) is used to prevent an instant overflow of data occurring due to the difference in data transfer rate and allow the CPU to communicate with a plurality of chips. An example of this construction is shown in FIG. 1.

Document EP 1 335 499 A2 discloses a semiconductor device to quickly save data in one area before the power supply in another area is stopped.

DPRAM has two input/output ports, so that data can be freely written in or read from the DPRAM between chips connected to the two ports. In FIG. 1, a CPU 100 exchanges data with a first modem 301 using first DPRAM 201, and exchanges data with a second modem 302 using second DPRAM 202. That is, the CPU 100 writes or reads data in or from the first DPRAM 201 using a signal line 11 connected to one port of the first DPRAM 201. The first modem 301 writes or reads data in or from the first DPRAM 201 using a signal line 12 connected to the other port of the first DPRAM 201. The communication between the CPU 100 and the second modem 302 is performed using the second DPRAM 202 through signal lines 11 and 13 similar to the communication between the CPU 100 and the first modem 301.

In the meantime, the DPRAMs 201 and 202 and the modem chips 301 and 302 may be connected to separate power sources including power 1 to power 4, respectively, to allow the CPU 100 to individually control the power. Further, according to circumstances, the first and second DPRAMs 201 and 202 may be connected together to a power source having the same level (for example: 2.8V). Further, these chips have terminals that are capable of controlling power-down operations thereof and are connected to control signals PE1, PE2, PE3 and PE4 output from the CPU 100, so that the CPU 100 can individually control the power-down operations of the chips.

However, in the case of a chip including Complementary Metal-Oxide Semiconductor (CMOS) or Transistor-Transistor Logic (TTL) devices, the state of the output terminal of the chip may not be defined when the chip is in a power-down state or sleep state. That is, the logic level of the output terminal may be changed to a high or low state in the power-down state or sleep state.

However, in the case of a modem chip, an interrupt terminal is frequently used to allow the modem chip to be released from a sleep state. That is, if a low signal is applied to the interrupt terminal, the modem chip is released from the sleep state and returns to a normal state. Therefore, if the output of DPRAM being in a power-down or sleep state and connected to the interrupt terminal of a modem chip becomes low when any one mode is inactivated, malfunction inevitably causing the modem chip to be activated may occur.

### SUMMARY OF THE INVENTION

Accordingly, the present invention has been made keeping in mind the above problems occurring in the prior art, and an object of the present invention is to provide a dual-mode mobile terminal having a mode switching circuit which is capable of preventing conventional malfunction that may occur when one mode is inactivated in a dual-mode mobile terminal equipped with a single CPU and two modems.

In order to accomplish the above object, the present invention provides a dual-mode mobile terminal comprising dual-port random access memories (DPRAMs) provided between the CPU and the modems, respectively, each DPRAM having a first port connected to a signal bus extending from the CPU and a second port connected to a signal bus extending from a corresponding modem so as to exchange data between the CPU and the modem. Interface units are provided between the DPRAMs and the modems to perform a control operation so that part of signals to be applied to each modem from the corresponding DPRAM are applied to the modem only when an activation signal for the modem is enabled. The interface units may be implemented using logic gates each having a first input terminal connected to the activation signal for the modem, a second input terminal connected to one of the part of signals, and an output terminal connected to a corresponding signal terminal extending from the modem, so that the one of the part of signals is output only when the activation signal for the modem is enabled. In the meantime, the corresponding signal applied through some of the signal lines may include an interrupt signal causing each modem to be released from a sleep state or power-down state.

### BRIEF DESCRIPTION OF THE DRAWINGS

FIG. 1 is a block diagram showing the connection of a CPU with modems in a conventional dual-mode mobile terminal;
FIG. 2 is a block diagram showing the connection of a CPU with modems in a dual-mode mobile terminal according to the present invention; and
FIG. 3 is a view showing an example of an interface between dual-port RAM and a modem.

### DESCRIPTION OF THE PREFERRED EMBODIMENTS

Hereinafter, embodiments of the present invention will be described in detail with reference to the attached drawings.

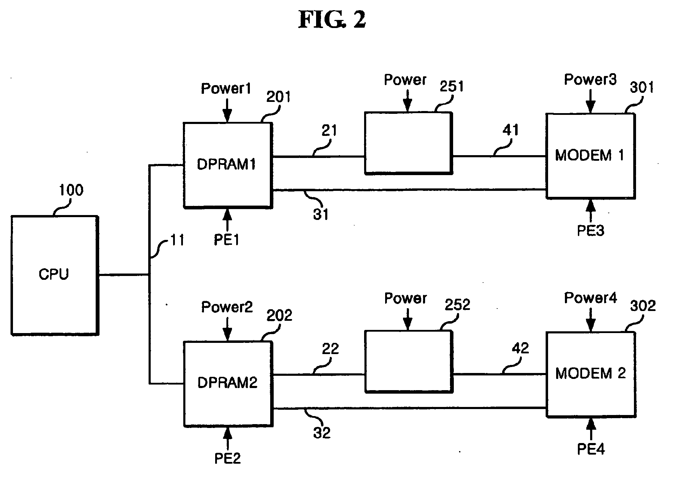

FIG. 2 is a block diagram showing the connection of a CPU with modems in a dual-mode mobile terminal according to the present invention.

In the present invention, interface units 251 and 252 are provided between signal lines 21 and 41, arranged between first DPRAM 201 and a first modem 301, and between signal lines 22 and 42, arranged between second DPRAM 202 and a second modem 302, respectively. Further, the remaining signal lines 31 and 32 are directly connected between the first DPRAM 201 and the first modem 301 and between the second DPRAM 202 and the second modem 302, respectively, similar to a conventional dual-mode mobile terminal.

The interface units 251 and 252 function to output stable signals to the modems 301 and 302 even though output signals of the DPRAMs 201 and 202 are not defined in a power-down or sleep state. For example, if a sleep state is released when low signals are applied to the interrupt terminals of the modems 301 and 302, the interface units 251 and 252 apply low signals to the interrupt terminals of the modems 301 and 302 only when the modems 301 and 302 must be activated, and apply high signals to the interrupt terminals at other times. Times when the modems 301 and 302 are activated may include a case where the activation signals for the modems 301 and 302 are enabled. The activation signals for the modems may be implemented to allow a CPU to enable a separate modem activation signal when a specific modem must be activated, or to use power enable signals PE3 and PE4 applied to the modems.

Signal lines connected through the interface units 251 and 252 include signal lines for allowing the modem chips to be released from a sleep or power-down mode, for example, interrupt signal lines. In addition to the interrupt signal lines, it is preferable that all signal lines, capable of influencing the operation of the modem chips according to the output of the DPRAMs when the output is not defined in a power-down or sleep state, pass through the interface units 251 and 252.

In the meantime, power supplied to the interface units 251 and 252 is preferably separate from the power 1 to 4 supplied to the DPRAMs 201 and 202 and the modems 301 and 302. That is, it is preferable that, even when the power is not supplied to the modems or DPRAMs, the interface units 251 and 252 be operated using separate power, that is, the same power as that supplied to the CPU 100. However, when power is constantly supplied to the modems and the DPRAMs, and the power supplied to these chips is controlled through separate power-down terminals, the same power as that used in these chips can be used.

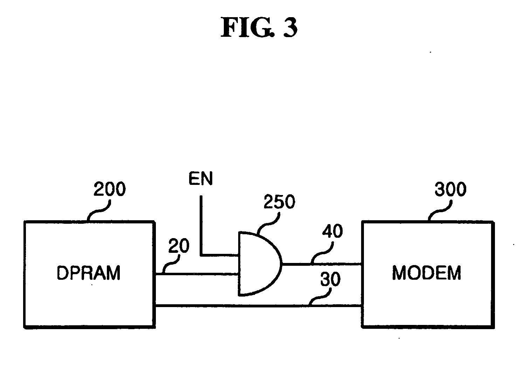

Next, an embodiment of the interface unit 251 or 252 is described with reference to FIG. 3.

In this embodiment, an AND gate 250 is used as the interface unit. This embodiment shows that a modem 300 is activated when a signal 40 applied to the modem 300 is high. One of the input terminals of the AND gate 250 is connected to a signal line 20 extending from the DPRAM 200, and the other thereof is connected to an activation signal EN for the modem 300. The output signal of the AND gate 250 is high only when both the input terminals are high, according to the characteristics of the AND gate 250. Accordingly, when the activation signal EN for the modem 300 is disabled, that is, low, the output signal of the AND gate 250 is low regardless of the logic state of the signal line 20 extending from the DPRAM 200. Therefore, since the signal 40 applied to the modem 300 is always maintained low when the activation signal EN for the modem 300 is disabled, malfunction causing the modem 300 to be influenced by variation in an output signal of the DPRAM 200 in the power-down or sleep state does not occur. In the meantime, the signal line 30, without having an influence on the modem 300, is directly connected from the DPRAM 200 to the modem 300.

Although the preferred embodiments of the present invention have been disclosed for illustrative purposes, those skilled in the art will appreciate that various modifications, additions and substitutions are possible.

For example, FIG. 3 shows an example of an interface using an AND gate, however, another type of gate, such as an OR gate, can be used according to the type of signal line of a modem. It is also possible to use a means other than a logic gate.

As described above, the present invention provides a dual-mode mobile terminal having a mode switching circuit, in which signal lines, influencing modems when one mode is inactivated, are connected to the modems through interface units in the dual-mode mobile terminal equipped with a single CPU and two modems, thus preventing malfunction from occurring due to variation in signal lines when the mode is inactivated.

## Claims

1. A dual-mode mobile terminal including a single Central Processing Unit (CPU 100) and two or more modems (301, 302), comprising:
dual-port random access memories (DPRAMs 201, 202) provided between the CPU (100) and the modems(300; 301, 302), respectively, each DPRAM (200; 201, 202) having a first port connected to a signal bus extending from the CPU and a second port connected to a signal bus extending from a corresponding modem so as to exchange data between the CPU and the modem; and **characterised by**
interface units (250; 251, 252) for performing a control operation so that part of signals to be applied to each modem (300; 301, 302) from the corresponding DPRAM are applied to the modem only when an activation signal for the modem is enabled.

2. The dual-mode mobile terminal according to claim 1, wherein the part of signals include an interrupt signal causing each modem to be released from a sleep state or power-down state.

3. The dual-mode mobile terminal according to claim 1 or 2, wherein the interface units are logic gates (250) each having a first input terminal connected to the activation signal (EN) for the modem (300), a second input terminal connected to one of the part of signals, and an output terminal connected to a corresponding signal terminal extending from the modem, so that the one of the part of signals is output only when the activation signal for the modem is enabled.

4. The dual-mode mobile terminal according to any of claims 1 to 3, wherein the interface units (250; 251, 252) are supplied with power separate from power supplied to the DPRAMs (200; 201, 202) or the modems (300; 301, 302).

## Patentansprüche

1. Dual-Mode Mobilendgerät mit einer einzelnen zentralen Verarbeitungseinheit (CPU 100) und zwei oder mehr Modems (301, 302), mit folgenden Merkmalen: Dual-Port-Direktzugriffsspeicher (DPRAMs 201, 202), die zwischen der CPU (100) und den Modems (300; 301, 302) angeordnet sind, wobei jeder DPRAM (200; 201, 202) einen ersten Port aufweist, der mit einem Signalbus verbunden ist, der von der CPU ausgeht, sowie einen zweiten Port, der mit einem Signalbus verbunden ist, der von einem zugehörigen Modem ausgeht, um Daten zwischen der CPU und dem Modem auszutauschen, **gekennzeichnet durch**
Schnittstelleneinheiten (250; 251, 252) zum Durchführen einer Steueroperation, so dass ein Teil der Signale, die von dem jeweiligen DPRAM an jedes Modem (300; 301, 302) angelegt werden sollen, nur dann an das Modem angelegt werden, wenn ein Aktivierungssignal für das Modem freigegeben ist.

2. Dual-Mode Mobilendgerät nach Anspruch 1, wobei der Teil der Signale ein Interrupt-Signal umfasst, das bewirkt, dass jedes Modem aus einem Schlafzustand oder Energiespar-Zustand freigegeben wird.

3. Dual-Mode Mobilendgerät nach Anspruch 1 oder 2, wobei die Schnittstelleneinheiten logische Gatter (250) sind, die jeweils einen ersten Eingangsanschluss, der mit dem Aktivierungssignal (EN) für das Modem (300) verbunden ist, einen zweiten Eingangsanschluss, der mit einem Signal aus dem Teil der Signale verbunden ist, und einen Ausgangsanschluss, der mit einem entsprechenden, von dem Modem ausgehenden Signalanschluss verbunden ist, aufweist, so dass das eine Signal aus dem Teil der Signale nur ausgegeben wird, wenn das Aktivierungssignal für das Modem freigegeben ist.

4. Dual-Mode Mobilendgerät nach einem der Ansprüche 1 bis 3, wobei die Schnittstelleneinheiten (250; 251, 252) getrennt von der den DPRAMs (200; 201, 202) oder den Modems (300; 301, 302) zugeführten Energie mit Energie versorgt werden.

## Revendications

1. Terminal mobile à double mode incluant une seule unité centrale (CPU 100) et deux modems ou plus (301, 302), comprenant :
des mémoires vives à double accès (DPRAM 201, 202) prévues entre le CPU (100) et les modems (300 ; 301, 302), respectivement, chaque DPRAM (200 ; 201, 202) ayant un premier accès connecté à un bus de signal s'étendant à partir du CPU et un second accès connecté à un bus de signal s'étendant à partir d'un modem correspondant de façon à échanger des données entre le CPU et le modem ; et
**caractérisé par** des modules d'interface (250 ; 251, 252) pour réaliser une opération de commande de sorte qu'une partie des signaux à appliquer à chaque modem (300 ; 301, 302) à partir de la DPRAM correspondante sont appliqués au modem seulement quand un signal d'activation du modem est validé.

2. Terminal mobile à double mode selon la revendication 1, dans lequel la partie des signaux inclut un signal d'interruption amenant chaque modem à être libéré d'un état de sommeil ou d'économie d'énergie.

3. Terminal mobile à double mode selon la revendication 1 ou 2, dans lequel les modules d'interface sont des portes logiques (250) ayant chacune une première borne d'entrée connectée au signal d'activation (EN) du modem (300), une seconde borne d'entrée connectée à l'une de la partie de signaux et une borne de sortie connectée à une borne de signal correspondante s'étendant à partir du modem de sorte que la première partie de signaux est fournie seulement quand le signal d'activation du modem est validé.

4. Terminal mobile à double mode selon l'une quelconque des revendications 1 à 3, dans lequel les modules d'interface (250 ; 251, 252) sont alimentés de façon séparée de l'alimentation fournie aux DPRAM (200 ; 201, 202) ou aux modems (300 ; 301, 302).
